(19) Europäisches Patentamt
European Patent Office
Office européen des brevets

(11) Veröffentlichungsnummer: **0 236 837**
**A2**

(12) # EUROPÄISCHE PATENTANMELDUNG

(21) Anmeldenummer: **87102579.7**

(22) Anmeldetag: **24.02.87**

(51) Int. Cl.$^4$: **C08L 83/10**, C08L 67/00, C08L 101/00, //(C08L83/10,101:00),(C08L67/00,83:10),(C08L101/00,83:10)

(30) Priorität: **06.03.86 DE 3607288**

(43) Veröffentlichungstag der Anmeldung: **16.09.87 Patentblatt 87/38**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Genz,Joachim,Dr.**
**Bodelschwinghstrasse 16**
**D-4150 Krefeld(DE)**
Erfinder: **Grigo, Ulrich, Dr.**
**Michelsheide 9**
**D-4152 Kempen 3(DE)**
Erfinder: **Paul,Winfried,Dr.**
**Bethelstrasse 22**
**D-4150 Krefeld 1(DE)**
Erfinder: **Dicke, Hans-Rudolf, Dr.**
**Bodelschwinghstrasse 16**
**D-4150 Krefeld(DE)**
Erfinder: **Bottenbruch, Ludwig, Dr.**
**Woehlerstrasse 5**
**D-4150 Krefeld(DE)**

(54) **Mischungen aus Polycarbonatpolysiloxan-Blockcokondensaten und thermotropen Polymeren, Verfahren zu ihrer Herstellung und ihre Verwendung zur Herstellung von Formkörpern, Filamenten, Fasern und Folien.**

(57) Mischungen aus Polycarbonatpolysiloxan-Blockcokondensaten und thermotropen Polymeren zeigen bei thermischer Belastung einen verminderten Schwund.

EP 0 236 837 A2

## Mischungen aus Polycarbonatpolysiloxan-Blockcokondensaten und thermotropen Polymeren, Verfahren zu ihrer Herstellung und ihre Verwendung zur Herstellung von Formkörpern, Filamenten, Fasern und Folien

Die Erfindung betrifft thermoplastische Mischungen aus aromatischen Polycarbonaten, die Polysiloxanblöcke einkondensiert enthalten, und thermotropen Polymeren, ein Verfahren zu ihrer Herstellung in der Schmelze und ihre Verwendung zur Herstellung von Formkörpern (vornehmlich durch Spritzguß), von Filamenten, Fasern und Folien.

Polycarbonatpolysiloxan-Blockcokondensate sind bekannt (US-PS 3 189 662, 3 419 634). Sie werden als elastomer, zugfest, hydrolysestabil und mit guten elektrischen Eigenschaften versehen beschrieben und als Rohstoff für die Herstellung von Formkörpern und Folien empfohlen. Allerdings weisen aus diesen Blockcokondensaten hergestellte Teile beim Erhitzen auf Temperaturen oberhalb der Glasübergangstemperatur einen merklichen Schwund auf, der diese Teile für den Einsatz bei höherer Temperatur, z.B. im Motorraum von Kraftfahrzeugen, unbrauchbar macht.

Die EP-A 44 175 und die GB-PS 15 38 632 beschreiben Mischungen aus Polycarbonat und thermotropem voll-aromatischem Polyester. Diese Mischungen sollen Glanz und hohe Wärmeformbeständigkeit sowie gute mechanische Eigenschaften, wie beispielsweise Zugfestigkeit, Zug-E-Modul, Biegefestigkeit, Biegemodul und Schlagzähigkeit besitzen. Über den Schwund beim Tempern wird nichts gesagt.

Wir haben nun gefunden, daß sich der bei höherer Temperatur auftretende Schwund von Polycarbonatpolysiloxan-Blockcokondensaten weitgehend vermeiden läßt, wenn man dem Blockcokondensat ein thermotropes Polymer zumischt. Besonders überrascht dabei, daß der Einfluß auf das Schwundverhalten stark überproportional, bezogen auf die Menge an thermotropem Polymer, ausfällt und daß der Schwund dementsprechend schon durch relativ geringe Mengen an thermotropem Polymer stark zurückgedrängt werden kann.

Gegenstand der Erfindung sind Mischungen aus

A) 1 bis 99, vorzugsweise 50 bis 95, insbesondere 80 bis 95 Gew.-% Polycarbonat und

B) 99 bis 1, vorzugsweise 50 bis 5, insbesondere 20 bis 5 Gew.-% thermotropem Polymer, wobei sich die Prozentangaben jeweils auf die Summe A + B beziehen,

dadurch gekennzeichnet, daß das Polycarbonat A ein Polycarbonatpolydiorganosiloxan-Blockcokondensat mit einer relativen Viskosität (gemessen an einer Lösung von 0,5 g Blockcokondensat in 1 dl Dichlormethan bei 25°C) von 1,10 bis 1,35, vorzugsweise von 1,15 bis 1,32, und einem Gehalt an Poly-(diorganosiloxan)-einheiten von 0,5 bis 10, vorzugsweise von 1 bis 7, Gew.-%, bezogen auf nicht-thermotropes Polycarbonat, ist, wobei diese Poly-(diorganosiloxan)-einheiten im Mittel 5 bis 100, vorzugsweise 20 bis 80, Siliciumatome pro Einheit enthalten.

Bevorzugte Polycarbonatpolydiorganosiloxan-Blockcokondensate A enthalten Diorganosiloxaneinheiten der Formel

$$-\overset{\displaystyle R}{\underset{\displaystyle R^1}{\overset{|}{\underset{|}{Si}}}}-O- \qquad (I)$$

worin

R und $R^1$ unabhängig voneinder $C_1$-$C_{20}$-, vorzugsweise $C_1$-$C_6$-Alkyl, $C_6$-$C_{14}$-, vorzugsweise $C_6$-Aryl bedeuten, wobei die Alkyl-und Arylreste einmal bis vollständig durch Fluor, Chlor oder Brom substituiert sein können.

Bevorzugte Reste R und $R^1$ umfassen Ethyl, Propyl, n-und tert.-Butyl, Chlormethyl, Trifluorpropyl, Phenyl, Chlorphenyl, Naphthyl, insbesondere Methyl.

90 bis 99,5, vorzugsweise 93 bis 99 Gew.-% des Blockcokondensats A bestehen aus Carbonylgruppen, Diphenolresten, gegebenenfalls Resten von Verzweigungsmitteln und gegebenenfalls aus Endgruppen.

Bevorzugte Diphenolreste entsprechen beispielsweise den Formeln

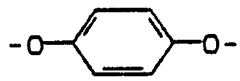
(II)

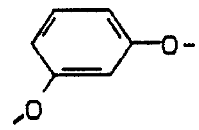
(III) und

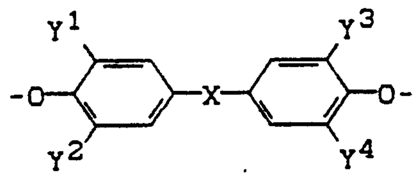
(IV)

worin

X eine Einfachbindung, $-CH_2-$, $-\overset{CH_3}{\overset{|}{C}}-$, 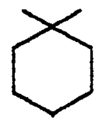, -O-,

$-S-$, $-SO_2-$ oder 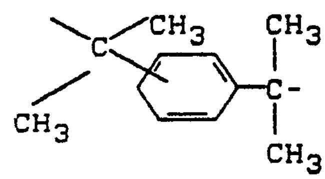 und

$Y^1$ bis $Y^4$ unabhängig voneinander Wasserstoff, $C_1$-$C_4$-Alkyl, vorzugsweise Methyl, oder Halogen, vorzugsweise Chlor oder Brom, bedeuten.

Bevorzugte Diphenolreste sind beispielsweise die Reste von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Bevorzugte Verzweigungsmittel für die Blockcokondensate A sind mindestens trifunktionelle Verbindungen, wie sie z.B. in den DE-OS 15 70 533 und 15 95 762 sowie in der US-PS 3 544 514 beschrieben sind, nämlich vorzugsweise dreiwertige Phenole, aromatische Tricarbonsäuren und Hydroxycarbonsäuren mit mindestens drei funktionellen Gruppen. Beispiele bevorzugter Verzweigungsmittel sind
2,4-Bis-(4-hydroxyphenyl-isopropyl)-phenol, 2,6-Bis-(2'-hydroxy-5'-methylbenzyl)-4-methylphenol,
2-(4-Hydroxyphenyl)-2-(2,4-dihydroxyphenyl)-propan,
1,4-Bis-(4,4'-dihydroxytriphenyl-methyl)benzol,
2,4-Dihydroxybenzoesäure, Trimesinsäure, Cyanurchlorid,
3,3-Bis-(4-hydroxy-phenyl)-2-oxo-2,3-dihydroindol sowie
3,3-Bis-(4-hydroxy-3-methyl-phenyl)-2-oxo-2,3-dihydroindol.

Wenn die Blockcokondensate A in verzweigter Form eingesetzt werden sollen, beträgt die Menge verzweigender Gruppen in der Regel 0,05 bis 2 Mol-%, bezogen auf die Diphenolreste des Blockcokondensats A.

Bevorzugte Endgruppen für die Blockcokondensate A sind Reste von Phenol, Benzoesäure, Mono-und Dialkylphenolen und Mono-und Dialkylbenzoesäuren, deren Alkylsubstituenten insgesamt bis zu 20 C-Atomen pro Endgruppe tragen können. Besonders bevorzugte Endgruppen entsprechen der Formel

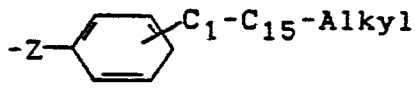

(V)

worin

Z -O- oder $-\underset{\underset{O}{\|}}{C}-$ bedeutet.

Beispiele bevorzugter Endgruppen sind die Reste von Phenol, p-tert.-Butyl-phenol, p-Isooctyl-phenol, p-Nonyl-phenol, 3,5-Di-tert.-butyl-phenol, 2-(3,5-Dimethylheptyl)-phenol und 4-(3,5-Dimethylheptyl)-phenol.

Anstelle der freien Phenole können deren Halogenkohlensäureester, anstelle der Carbonsäuren ihre Säurechloride eingesetzt werden.

Die Menge der Endgruppen beträgt vorzugsweise 1 bis 10 Mol-%, bezogen auf die Diphenolreste des Blockcokondensats A.

Die Herstellung der Blockcokondensate A kann beispielsweise aus $\alpha$, $\omega$-Bis(hydroxyaryloxy)-polydiorganosiloxanen, Bisphenolen, Kohlensäurederivaten, z.B. Phosgen, gegebenenfalls Kettenabbrechern und gegebenenfalls Verzweigungsmitteln nach dem Zweiphasengrenzflächenverfahren unter üblichen Bedingungen erfolgen. Auch das Umesterungs-und das sog. Pyridinverfahren sind zur Herstellung geeignet.

Die Zahl der Siliciumatome pro Einheit (= mittlere Siloxanblocklänge) kann man für den Fall der eigenen Herstellung durch Bestimmung der Endgruppen am Polysiloxan-Ausgangsmaterial ermitteln.

Die Ermittlung des Polymerisationsgrades der Siloxanblöcke am fertigen Blockcokondensat wird durch Verseifung des Polycarbonatanteils möglich. Der nicht verseifbare Siloxanblock wird so der polymeranalytischen Untersuchung (GPC, HPLC, Endgruppenbestimmung) zugänglich.

Der erfindungsgemäße Effekt tritt erst dann ein, wenn das Polycarbonatpolysiloxan-Blockcokondensat A mit dem thermotropen Polymer B gemischt wird.

Als "thermotrop" bezeichnet man solche Substanzen, die flüssigkristalline Schmelzen bilden. Thermotrope Polymere sind hinreichend bekannt, vergleiche z.B.

F. E. McFarlane et. al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymers Chem. Ed. 14, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, S. 1-19 (1982);

A. Ciferri, W. R. Krigbaum. R. B. Meyer "Polymer Liquid Crystals", Academic Press, New York, 1982;

EP-A 1185, 1340, 8855, 11 640, 15 856, 17 310, 18 145, 18 709, 22 344, 44 205, 49 615;

US-PS 3 991 013, 3 991 014, 4 066 620, 4 067 852, 4 083 829, 4 107 143;

WO 79/797, 769/1034, 79/1040

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okular linse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polymerschmelzen betrug 100 µm.

Die Untersuchung der potentiell flüssig-kristallinen Polymeren erfolgte nach dem Aufschmelzen der Proben bei Temperaturen zwischen 280°C und 400°C. Sofern in diesem gesamten Bereich oder in einem Teil davon eine Aufhellung der zwischen den gekreuzten Nicolschen Prismen beobachteten Schmelze auftrat, wurde das Polymer als thermotrop flüssig-kristallin eingestuft.

Die flüssig-kristallinen Polymere zeigen in der Meßanordnung Werte über 1 Skalenteil, meist Werte von 3 bis 90 Skalenteilen. Für amorphe Schmelzen z.B. aromatische Polycarbonate, wurden dagegen Werte von weniger als 0,1 Skalenteile gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P. A. Windsor, "Plastic Crystals, Physico-Chemical Properties and Methods of Investigation", insbesondere Chapter 3, John Wiley & Sons, New York, Sydney, Toronto 1974 beschrieben ist.

Zur Herstellung der erfindungsgemäßen Mischungen sind beispielsweise die folgenden thermotropen Polymeren B geeignet:

-Polyester,
-Polythiolester,
-Polyesteramide,
-Polyesterimide,
-Polyazomethine,
-Polyestercarbonate.

Bevorzugte thermotrope Polymere B sind vollaromatische Polyester auf Basis von

a. aromatischen Dicarbonsäuren,
b. Diphenolen und gegebenenfalls
c. aromatischen Hydroxycarbonsäuren, wobei das Molverhältnis von Resten einkondensierter aromatischer Dicarbonsäuren zu Resten einkondensierter Diphenole 0,95 bis 1,05 beträgt und die Reste einkondensierter aromatischer Hydroxycarbonsäuren 0 bis 100 Mol-%, vorzugsweise 30 bis 80 Mol-%, insbesondere 50 bis 70 Mol-%, bezogen auf einkondensierte Reste a und c), ausmachen.

Aromatische Dicarbonsäuren a) sind alle jene Dicarbonsäuren, deren Carboxylgruppen unmittelbar an einen aromatischen Ring geknüpft sind.

Bevorzugte aromatische Dicarbonsäuren a) entsprechen der Formel

HOOC -A -COOH (VI)

worin

A einen bivalenten aromatischen Rest mit 6 bis 24 C-Atomen, vorzugsweise mit 6 bis 16 C-Atomen, bedeutet.

Bevorzugte aromatische Reste A sind solche, bei denen sich die beiden Bindungen zu den Carboxylgruppen koaxial in entgegengesetzte Richtungen erstrecken, wie beispielsweise in 1,4-Phenylen, 1,4-Naphthylen oder 4,4'-Biphenylen, oder bei denen die in entgegengesetzte Richtungen zeigenden Bindungen parallel zueinander verschoben sind, wie beispielsweise in 1,5-Naphthylen, 2,6-Naphthylen oder 3,5'-Biphenylen.

Auch aromatische Reste A, deren beide Bindungen zu den Carboxylgruppen sich nicht koaxial oder parallel verschoben in entgegengesetzte Richtungen erstrecken, sind geeignet, sofern die beiden Bindungen einen Winkel von 45° bis weniger als 180° einschließen und nicht an direkt benachbarten Kohlenstoffatomen sitzen, wie beispielsweise in 1,3-Phenylen, 1,3-, 1,6-, 1,7-oder 2,7-Naphthylen oder 3,4-Biphenylen.

Bevorzugte aromatische Dicarbonsäuren a) sind z.B. 1,4-Naphthalindicarbonsäure, 1,5-Naphthalindicarbonsäure, 2,6-Naphthalindicarbonsäure, 4,4'-Biphenyl-dicarbonsäure, 3,3'-Biphenyl-dicarbonsäure, 4,4'-Diphenoxyethan-dicarbonsäure, 4,4'-Diphenylether-dicarbonsäure, Methyl-terephthalsäure, Methoxyterephalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, 3,4'-Biphenyl-dicarbonsäure, 3,4'-Diphenylether-dicarbonsäure, 4-Methylisophthalsäure, 5-Methylisophthalsäure und 4,4-Dichlordiphenylether-3,3'-dicarbonsäure.

Besonders bevorzugte aromatische Dicarbonsäuren a) sind Iso-und Terephthalsäure.

Bevorzugte Diphenole b) entsprechen der Formel

HO -D -OH (VII)

worin

D einen zweiwertigen ein-oder mehrkernigen aromatischen Rest mit 6 -30 C-Atomen bedeutet, wobei D derart gebaut ist, daß die beiden OH-Gruppen direkt an je ein Kohlenstoffatom eines aromatischen Systems gebunden sind und die beiden Bindungen zu den phenolischen Hydroxygruppen einen Winkel von 45° bis 180° bilden. Für die Konstitution des Restes D gilt das gleiche wie für den aromatischen Rest A oben beschrieben worden ist.

Besonders bevorzugte Diphenole b) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3' ,5,5'-Tetramethyl-4,4'-dihydroxydiphenyl, 3,5'-Dimethoxy-4,4'-dihydroxydiphenyle-

ther, 1,2-(2-Chlor-4-hydroxyphenoxy)-ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Ganz besonders bevorzugte Diphenole b) sind Hydrochinon, Resorcin und 4,4'-Dihydroxydiphenyl.

Bevorzugte aromatische Hydroxycarbonsäuren c) sind z.B. Verbindungen der Formeln

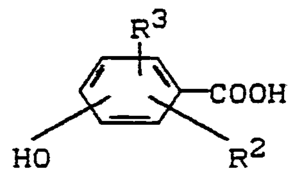

(VIII)

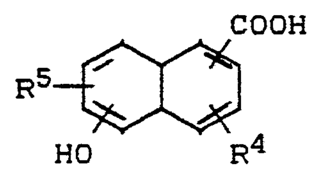

(IX)

worin

$R^2$ bis $R^5$ $C_1$-$C_4$-Alkyl, $C_1$-$C_4$-Alkoxy, $C_6$-$C_{10}$-Aryl oder -Aryloxy, $C_7$-$C_{12}$-Aralkyl (vorzugsweise Benzyl), Halogen (vorzugsweise Chlor und Brom) oder Wasserstoff bedeuten und die Bindungen zwischen Kern und Hydroxylgruppe bzw. Carboxylgruppe einen Winkel von 45° bis 180° bilden.

Besonders bevorzugte aromatische Hydroxycarbonsäuren c) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Methyl-3-hydroxybenzoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure.

Ganz besonders bevorzugte aromatische Hydroxycarbonsäuren c) sind unsubstituierte Hydroxycarbonsäuren, wie p-Hydroxybenzoesäure und 6-Hydroxy-2-naphthoesäure.

Nicht sämtliche Kombinationen der aufgezählten Ausgangsmaterialien ergeben thermotrope Polyester. Der Fachmann wird seine Auswahl jeweils anhand der oben zitierten Literatur treffen oder aber aufgrund seiner Erfahrung geeignete Kombinationen auswählen.

Als Endgruppen können die thermotropen Polyester -COOH, -H, -OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, ß-Naphthol und aromatische Monocarbonsäuren, wie Diphenylcarbonsäuren und Naphthalincarbonsäuren. Endgruppen können in Mengen von 0,5 bis 5 Mol-%, bezogen auf die Summe von aromatischen Dicarbonsäureresten a und Diphenolresten b, vorhanden sein.

Die thermotropen Polyester können auch durch drei-oder höherfunktionelle -vorzugsweise aromatische - Monomere verzweigt sein. Die Mengen verzweigender Verbindungen betragen in der Regel 0,1 bis 1 Mol-%, bezogen auf die Summe von aromatischen Dicarbonsäureresten a und Diphenolresten b. Beispiele für bevorzugte Verzweigungsmittel sind Phloroglucin, 1,3,5-Benzoltricarbonsäure und 3,5-Dihydroxybenzoesäure.

Die thermotropen Polyester besitzen in der Regel eine inhärente Viskosität von mindestens 0,5, vorzugsweise von mindestens 1,0 dl/g (gemessen an einer Lösung von 5 mg Polyester/ml p-Chlorphenol bei 45°C). Sollten Polyester in p-Chlorphenol unlöslich sein, wird angenommen, daß sie die angegebene Mindestviskosität besitzen.

Bevorzugte thermotrope Polymere B sind auch vollaromatische Polyestercarbonate, d.h. voll-aromatische Polyester -z.B. wie oben beschrieben -deren aromatische Dicarbonsäurereste teilweise, vorzugsweise zu 60 bis 100, insbesondere zu 60 bis 90, Mol-%, durch Carbonylgruppen ersetzt sind.

Bevorzugte thermotrope voll-aromatische Polyestercarbonate B sind Polykondensate auf Basis von

a) (gegebenenfalls substituierter) p-Hydroxybenzoesäure,

b) Diphenol,

c) Kohlensäure, gegebenenfalls

d) aromatischer Dicarbonsäure und gegebenenfalls

e) Kettenabbrecher, wobei ein Teil der Diphenolreste (b) als 4,4'-Dihydroxybiphenylreste (f) vorliegt und -abgesehen von den Endgruppen -für die molaren Verhältnisse der Reste folgendes gilt:

$a + b = 1$,

$b = c + d$,

$f = 0{,}1$ bis $0{,}9$, vorzugsweise $0{,}11$ bis $0{,}7$, insbesondere $0{,}125$ bis $0{,}4$ und

$$\frac{c}{c + d} = 0{,}6 \text{ bis } 1, \text{ vorzugsweise } 0{,}6 \text{ bis } 0{,}9;$$

a = 0,4 bis 0,8, vorzugsweise 0,6 bis 0,75,
b -f = 0,02 bis 0,53, vorzugsweise 0,06 bis 0,36, insbesondere 0,1 bis 0,35,
c = 0,12 bis 0,6, vorzugsweise 0,175 bis 0,4,
d = 0 bis 0,24, vorzugsweise 0 bis 0,12 und
f = 0,02 bis 0,53, vorzugsweise 0,0275 bis 0,28, insbesondere 0,3 bis 0,16.

Bevorzugte (a) p-Hydroxybenzoesäuren sind Verbindungen der Formeln VIII und IX.

Bevorzugte (b) Diphenole sind Verbindungen der Formel VII.

Bevorzugte (d) aromatische Dicarbonsäuren sind Verbindungen entsprechend Formel VI.

Die voll-aromatischen Polyestercarbonate B können beispielsweise die bei den voll-aromatischen Polyestern B erwähnten Endgruppen enthalten.

Die voll-aromatischen Polyestercarbonate B können die Einheiten a bis d und f in statistischer Verteilung oder in Blöcken enthalten.

Die voll-aromatischen Polyestercarbonate B besitzen in der Regel eine inhärente Viskosität von mindestens 0,5, vorzugsweise von mindestens 1,0 dl/g (gemessen an einer Lösung von 5 mg Polyestercarbonat/ml p-Chlorphenol bei 50°C).

Die thermotropen Polymeren B können zwecks Verbesserung ihrer Eigenschaften einer Festphasennachkondensation unterworfen werden. Üblicherweise führt man diese für 1 bis 25 Stunden bei 200 bis 300°C und bei vermindertem Druck durch.

In einer bevorzugten Ausführungsform enthalten die erfindungsgemäßen Mischungen wirksame Mengen Stabilisator, um die unerwünschte Umesterung der Komponenten A und B untereinander möglichst weitgehend zu verhindern.

Um festzustellen, ob eine gegebene Stabilisatormenge die unerwünschte Umesterung wirksam unterdrückt, empfiehlt sich folgende Methode: Auf einer Knetmaschine werden die Komponenten A und B - vorzugsweise in Granulatform -zusammen mit dem Stabilisator 15 Minuten lang bei 60 U/Min. und einer Temperatur von 300°C gemischt. Der in $CH_2Cl_2$ bei 25°C lösliche Anteil der so erhaltenen Mischung wird mittels $^1$H-NMR-Spektroskopie auf Umesterung untersucht; vgl. J. Defaux, P. Godard, J. P. Mercier, J. Polym. Sci., Polym. Physics Ed., 20, 1881-1894 (1982), Liegt der so bestimmte Umesterungsgrad unter 5 Mol-%, bezogen auf die im Unterschuß vorhandene Komponente, so wird die geprüfte Stabilisatormenge als "wirksam" in Sinne der Erfindung eingestuft.

Welche Verbindungen Umesterungen verhindern können, ist dem Fachmann bekannt. Sie umfassen beispielsweise Phosphorsäure, phosphorige Säure und deren aliphatische, aromatische oder araliphatische Ester, z.B. Alkylester mit 6 bis 18 C-Atomen in der Alkoholkomponente, Phenylester, deren Phenylreste gegebenenfalls mit 1 -3 Substituenten mit 6 bis 18 C-Atomen substituiert sind, wie Trinonylphenyl-, Dodecylphenyl-und Triphenylphosphat; Arsenverbindungen wie Arsen(III)-und Arsen(V)-oxid; Borsäurederivate; Acetessigsäureester. Eine Übersicht über diese Art von Stabilisatoren findet sich bei H. Ludewig, Polyesterfasern, 2. Aufl., Akademie-Verlag, Berlin 1974. Erfindungsgemäß besonders bevorzugte Stabilisatoren sind beispielsweise:

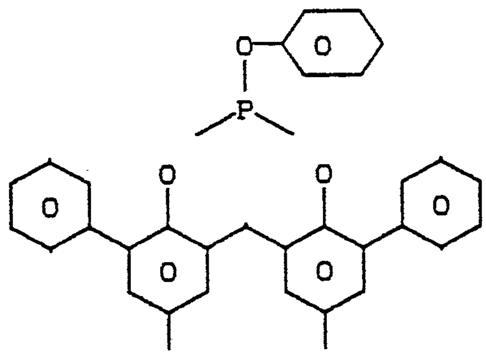

(X)

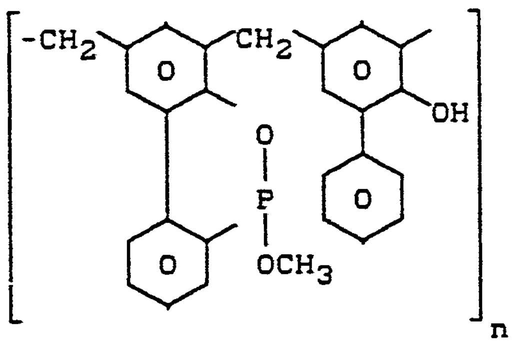

n = 1 - 10

(XI)

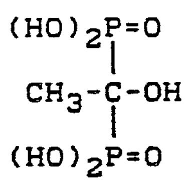

(XII)

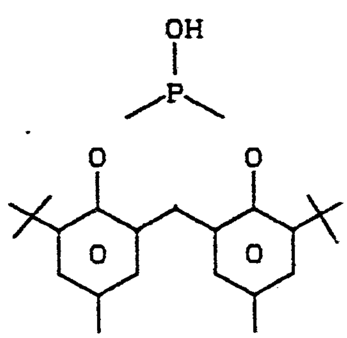

(XIII)

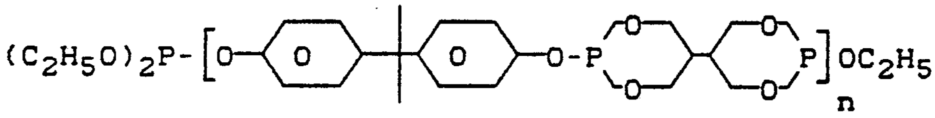

(XIV)

n = 1 - 10

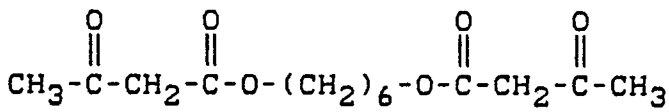

(XV)

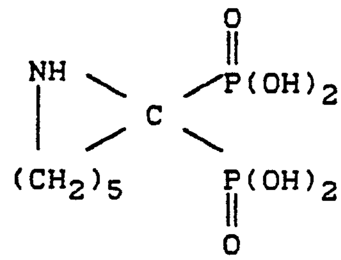

(XVI)

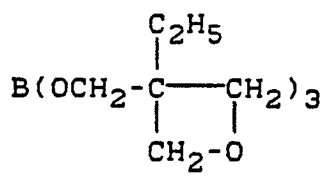

(XVII)

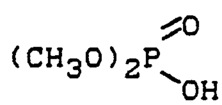

(XVIII)

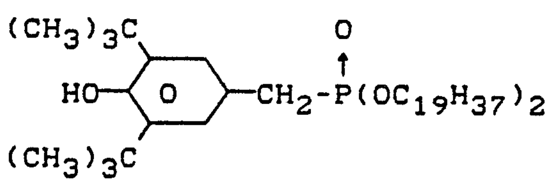

(XIX)

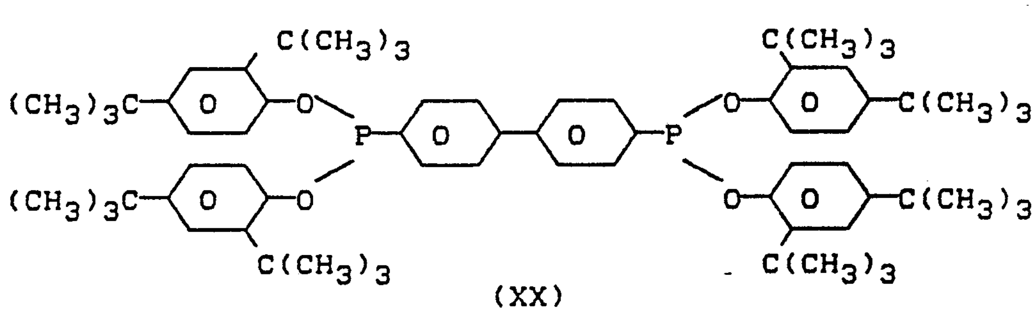

(XX)

Die erfindungsgemäßen Mischungen können übliche Verarbeitungshilfsmittel, wie z.B. Fließ-und Entformungsmittel, Füll-und Verstärkungsmittel, wie z.B. Talk, Kreide, Glasfasern, Farbpigmente, wie z.B. Titandioxid, Ruß und/oder Brandschutzmittel, wie z.B. Halogenverbindungen, Antimonoxid, enthalten.

Die Herstellung der erfindungsgemäßen Mischungen aus den Komponenten geschieht vorzugsweise in Extrudern. Es sind jedoch auch Kneter, Walzen oder Rührgefäße zur Herstellung geeignet. Weiterer Gegenstand der Erfindung ist daher ein Verfahren zur Herstellung der erfindungsgemäßen Mischungen in der Schmelze, vorzugsweise bei Temperaturen von 280 bis 320°C.

Darüber hinaus ist die Herstellung der Mischungen auch durch gemeinsames Ausfällen der Mischungskomponenten aus einem Gemisch der jeweiligen Lösungen mit einem Nichtlösemittel für beide Komponenten möglich. Nichtlösemittel für beide Mischungskomponenten sind vorzugsweise $C_1$-$C_7$-Alkylalkohole und $C_5$-$C_{20}$-Kohlenwasserstoffe. Besonders bevorzugtes Nichtlösemittel für beide Mischungskomponenten ist Methanol.

Die erfindungsgemäßen Mischungen können aus der Schmelze zu Spritzgußformteilen, Filamenten, Fasern, Bändern und Folien verarbeitet werden, wobei in der flüssig-kristal-linen Phase durch die auftretenden Scherkräfte eine Molekulorientierung erzielt wird, die in hohem Maße von der Stärke der Scherkräfte beeinflußt wird. Deswegen zeigen sie eine ausgeprägte Strukturviskosität, die bei Erhöhung der Scherkräfte stark abfällt. Geeignete Verarbeitungsverfahren sind Spritzguß, Extrusion, Pressen und Schmelzspinnen.

Aus den erfindungsgemäßen Mischungen hergestellte Formteile eignen sich besonders zur Herstellung von

-elektrotechnischen Artikeln, wie z.B. Isolatoren, gedruckten Schaltungen, Steckkontakten, Armaturenteilen,
-Teilen der Flugzeuginnenausstattung,
-Teilen medizinisch-technischer Geräte, wie z.B. Bauteilen von Klimaanlagen, Ventilteilen.

Die erfindungsgemäßen Mischungen können aber auch als Überzugs-und Beschichtungsmaterial - (pulverförmig oder dispergiert) verwendet werden.

Weitere Gegenstand der Erfindung ist also die Verwendung der neuen Mischungen zur Herstellung von Formkörpern, Filamenten, Fasern und Folien.

<u>Beispiele</u>

Das verwendete Bisphenol-Polycarbonat-poly(dimethylsiloxan) zeigte nach Auflösen in Methylenchlorid in einer Konzentration von 0,5 g/dl bei 25°C eine relative Vixkosität ($\eta$ rel) von 1.29. Es enthielt 5 Gew.-% Polydimethylsiloxan-Einheiten in einer mittleren Blocklänge von $P_n$ = 40.

Für die Herstellung der Mischungen wurde ein vollaromatischer Polyester (APE) auf der Basis von 0,65 Mol p-Hydroxybenzoesäure, 0,3 Mol Hydrochinon, 0,3 Mol Isophthalsäure, 0,5 Mol Terephthalsäure und 0,5 Mol 4,4'-Dihydroxydiphenyl bzw. ein vollaromatisches Polyestercarbonat (PEC) auf der Basis von 0,68 Mol p-Hydroxybenzoesäure, 0,28 Mol Hydrochinon, 0,293 Mol Diphenylcarbonat, 0,04 Mol 4,4'-Dihydroxydiphenyl und 0,027 Mol Terephthalsäure verwendet. Der vollaromatische Polyester zeigte in einer Konzentration von 0,5 g/dl in p-Chlorphenol bei 45°C eine relative Viskosität ($\eta$ rel) von 1.90, das voll-aromatische Polyestercarbonat von 3,20.

Für die Herstellung der Mischungen wurden zunächst die Komponenten in Granulatform 16 Stunden bei 90°C im Vakuum getrocknet. Die Granulate der Komponenten wurden miteinander vermischt und mit Hilfe eines Doppelwellenextruders aufgeschmolzen, innig vermischt und in einem Strang ausgetragen. Dieser wurde abgekühlt und in Granulatform zerhackt. Das Granulat der Mischung wurde unmittelbar vor der Weiterverarbeitung erneut getrocknet. Im Spritzgieß verfahren wurden bei 60 bar Spritzdruck-Zugstäbe Nr. 3 hergestellt. Diese Zugstäbe wurden 16 Stunden bei 180°C -also oberhalb der Glastemperatur der Komponenten A und B - gelagert. Danach wurde der prozentuale Längenschrumpf bestimmt (angegeben die minimalen und die maximalen Werte verschiedener Messungen).

| Komp. A [Gew.-%] | Komp. B [Gew.-%] | Art | Stabilisator [Gew.-%] | Art | Schrumpf [%] |
|---|---|---|---|---|---|
| 89,90 | 10 | APE | 0,1 | X | 1,25/3,75 |
| 89,90 | 10 | APE | 0,1 | X | 0,625 |
| 89,90 | 10 | APE | 0,1 | X | 0,625/1,25 |
| 89,90 | 10 | PEC | 0,1 | X | 0,625 |
| 89,90 | 10 | PEC | 0,1 | X | 0,3125 |
| 89,90 | 10 | PEC | 0,1 | X | 0,625 |
| 89,90 | 10 | APE | 0,1 | XI | 2,5 |
| 89,90 | 10 | APE | 0,1 | XII | 1,875 |
| 89,90 | 10 | APE | 0,1 | XIII | 1,25 |
| 89,90 | 10 | APE | 0,1 | XIV | 1,25 |
| 89,90 | 10 | APE | 0,1 | XV | 0,625 |
| 89,90 | 10 | APE | 0,1 | XVI | 1,25 |
| 89,95 | 10 | APE | 0,05 | X | 2,5 |
| 89,90 | 10 | APE | 0,1 | X | 1,875 |
| 89,75 | 10 | APE | 0,25 | X | 2,5/3,125 |
| 89,90 | 10 | APE | 0,1 | XVII | 9,375 |
| 89,90 | 10 | APE | 0,1 | XVIII | 1,25 |
| 100 | - | - | - | - | 15,0/22,5 |
| - | 100 | APE | - | - | 0 |
| - | 100 | PEC | - | - | 0 |

**Ansprüche**

1. Mischungen aus
A) 1 bis 99 Gew.-% Polycarbonat und
B) 99 bis 1 Gew.-% thermotropem Polymer, wobei sich die Prozentangaben jeweils auf die Summe A+B beziehen,
dadurch gekennzeichnet, daß das Polycarbonat A ein Polycarbonatpolydiorganosiloxan-Blockcokondensat mit einer relativen Viskosität (gemessen an einer Lösung von 0,5 g Blockcokondensat in 1 dl Dichlormethan bei 25°C) von 1,10 bis 1,35 und einem Gehalt an Poly-(diorganosiloxan)-einheiten von 0,5 bis 10 Gew.-%, bezogen auf nicht-thermotropes Polycarbonat, ist, wobei diese Poly-(diorganosiloxan)-einheiten im Mittel 5 bis 100 Siliciumatome pro Einheit enthalten.

2. Mischungen nach Anspruch 1, dadurch gekennzeichnet, daß sie 50 bis 95 Gew.-% Komponente A und 50 bis 5 Gew.-% Komponente B, jeweils auf die Summe A+B bezogen, enthalten.

3. Mischungen nach Anspruch 1, dadurch gekennzeichnet, daß sie 80 bis 95 Gew.-% Komponente A und 20 bis 5 Gew.-% Komponente B, jeweils auf die Summe A + B bezogen, enthalten.

4. Mischungen nach Ansprüchen 1-3, dadurch gekennzeichnet, daß Komponente A eine relative Viskosität von 1,10 bis 1,35 besitzt.

5. Mischungen nach Ansprüchen 1-4, dadurch gekennzeichnet, daß Komponente A 1 bis 7 Gew.-% Poly(diorganosiloxan)-einheiten enthält.

6. Mischungen nach Ansprüchen 1-5, dadurch gekennzeichnet, daß die Poly-(diorganosiloxan)-einheiten im Mittel 20 bis 80 Siliciumatome pro Einheit enthalten.

7. Mischungen nach Ansprüchen 1-6, dadurch gekennzeichnet, daß Komponente B aus der Gruppe der thermotropen Polyester, Polythiolester, Polyesteramide, Polyesterimide, Polyazomethine und Polyestercarbonate ausgewählt ist.

8. Mischungen nach Ansprüchen 1-7, dadurch gekennzeichnet, daß Komponente B als Diphenolreste Bisphenol-A-einheiten enthält.

9. Verfahren zur Herstellung der Mischungen nach Ansprüchen 1-8 durch Mischen der Komponenten in der Schmelze.

10. Verwendung der Mischungen nach Ansprüchen 1-8 zur Herstellung von Formkörpern, Filamenten, Fasern und Folien.